# EUROPÄISCHE PATENTANMELDUNG

(11) **EP 4 169 749 A1**
(43) Veröffentlichungstag der Anmeldung: **26.04.2023**
(21) Anmeldenummer: 21203816.0
(22) Anmeldetag: 20.10.2021
(51) Int. Cl.: B60D 5/00, B61D 17/22

(54) **FLÄCHENGEBILDE, ÜBERGANGSELEMENT UND FAHRZEUG, FLUGGASTBRÜCKE, FLUGGASTTREPPE ODER GEBÄUDEVERBINDUNG**

(71) Anmelder: Hübner GmbH & Co. KG, 34123 Kassel (DE)
(72) Erfinder: HÜBSCH, Daniel, 34277 Fuldabrück (DE); HIRLING, Christian, 34385 Bad Karlshafen (DE); UNGEFUG, Alexander, 34225 Baunatal (DE); KNITTERSCHEIDT, Dennis, 34121 Kassel (DE)
(74) Vertreter: Ter Meer Steinmeister & Partner

(57) **Zusammenfassung**

Die Erfindung betrifft ein Flächengebilde (100). Das Flächengebilde umfasst ein Trägermaterial (120) und eine Beschichtung (140). Das Trägermaterial umfasst elektrisch leitfähige Garne (20) und die Beschichtung ist auf zumindest einer Seite des Trägermaterials aufgebracht. Durch die elektrisch leitfähigen Garne (20) ist eine Sensoranordnung (130) in dem Flächengebilde (100) gebildet.

## Beschreibung

### TECHNISCHES GEBIET

Die Erfindung betrifft ein Flächengebilde. Weiterhin betrifft die Erfindung ein Verfahren zum Erfassen einer Bewegung eines Flächengebildes. Ein Aspekt der Erfindung betrifft die Herstellung eines Flächengebildes. Ebenso betrifft die Erfindung ein Übergangselement mit einem Flächengebilde. Ein weiterer Aspekt der Erfindung liegt in einem Fahrzeug, einer Fluggastbrücke, einer Fluggasttreppe oder einer Gebäudeverbindung mit einem Übergangselement, das ein Flächengebilde umfasst. Außerdem betrifft die Erfindung eine Verwendung eines Flächengebildes für ein Übergangselement eines Fahrzeug, einer Fluggastbrücke, einer Fluggasttreppe oder einer Gebäudeverbindung, für eine Plane einer Anlage oder für Ummantelung oder eine Verkleidung.

### TECHNISCHER HINTERGRUND

Flächengebilde können in unterschiedlichen Anwendungen zum Einsatz kommen. Beispielsweise können beweglich miteinander verbundene Bauteile, z.B. in einem Fahrzeug, einer Fluggastbrücke oder -treppe oder in Gebäuden, einen Übergang aufweisen. Der Übergang kann durch einen Übergangsschutz (auch Übergangselement genannt) geschützt werden. Ein solcher Übergangsschutz kann als Wellen- oder Faltenbalg ausgestaltet sein. Die Form des Wellen- oder Faltenbalgs kann sich an die Stellung der beweglich miteinander verbundenen Bauteile zueinander anpassen. Der Wellen- oder Faltenbalg kann das Flächengebilde umfassen, beispielsweise als flexibles Wandelement zwischen Rahmenelementen.

Auch kann ein Flächengebilde für eine Plane einer Anlage, beispielsweise für eine Plane einer Biogasanlage, eingesetzt werden. Eine weitere Anwendung für Flächengebilde liegt in Ummantelungen oder Verkleidungen, insbesondere in der Ummantelung oder Verkleidung von beweglichen Vorrichtungen. Die Vorrichtungen können Treibstoffleitungen, Treibstofftanks oder Treibstoffzuführungen sein.

In den genannten Anwendungen lässt sich die tatsächliche Belastung des Flächengebildes durch eine Bewegung des Flächengebildes über einen Zeitraum lediglich abschätzen. So kann das Flächengebilde häufiger oder stärker bewegt werden als abgeschätzt, wodurch das Flächengebilde früher als erwartet oder geplant repariert oder ausgetauscht werden muss. Wird die Reparatur oder der Austausch des Flächengebildes nicht rechtzeitig durchgeführt, kann dieses Versagen, was beispielsweise bei einem Übergangselement die Personensicherheit gefährden kann. Auch kann es zu ungeplanten Ausfallzeiten eines Fahrzeugs mit dem Übergangselement kommen, was sich nachteilig auf den Verkehrsfluss auswirken kann. Ebenso kann sich ein Sicherheitsrisiko ergeben, wenn eine Ummantelung oder Verkleidung einer Treibstoffleitung frühzeitig versagt.

Wenn das Flächengebilde als Plane für beispielsweise eine Biogasanlage verwendet wird, kann ein Zustand der Anlage auf Grundlage der Bewegung der Plane abgeschätzt oder ermittelt werden.

### ZUSAMMENFASSUNG DER OFFENBARUNG

Der Erfindung liegt die Aufgabe zu Grunde ein Flächengebilde bereitzustellen, durch das ein Verschleiß des Flächengebildes abschätzbar oder ermittelbar ist. Eine weitere Aufgabe der Erfindung liegt darin, ein Flächengebilde bereitzustellen, durch das eine Bewegung des Flächengebildes abschätzbar oder ermittelbar ist. Eine weitere Aufgabe der Erfindung liegt darin, ein Flächengebilde bereitzustellen, durch das Sicherheitsrisiken reduziert werden. Eine noch weitere Aufgabe der Erfindung liegt darin, ein Flächengebilde bereitzustellen, durch das ein Zustand einer Vorrichtung, z.B. eines Fahrzeugs oder einer Anlage, abschätzbar oder ermittelbar ist.

Zumindest eine der Aufgaben wird durch die Gegenstände der unabhängigen Ansprüche gelöst. Weiterbildungen der Erfindung sind in den abhängigen Ansprüchen definiert.

Angegeben ist ein Flächengebilde. Das Flächengebilde umfasst ein Trägermaterial und eine Beschichtung. Das Trägermaterial umfasst elektrisch leitfähige Garne. Die Beschichtung ist auf zumindest einer Seite des Trägermaterials aufgebracht. Durch die elektrisch leitfähigen Garne ist eine Sensoranordnung in oder auf dem Flächengebilde gebildet.

Das Flächengebilde kann teilweise ein textiles Flächengebilde sein. Zumindest ein Abschnitt oder ein Teil des Flächengebildes kann ein Textil umfassen oder aus einem Textil bestehen. Höchstens ein Abschnitt oder ein Teil des Flächengebildes kann ein Textil umfassen oder aus einem Textil bestehen.

Das Flächengebilde kann ein Flächengebilde für ein Übergangselement zum Schutz eines Übergangs von zwei relativ zueinander beweglich miteinander verbundenen Fahrzeugteilen oder Bauteilen sein. Das Flächengebilde kann für eine Außenanwendung geeignet sein. Ein für eine Außenanwendung geeignetes Flächengebilde kann Umwelteinflüssen, wie Hitze, Kälte, Nässe, Sonneneinstrahlung und/oder Staub, standhalten. Das Flächengebilde kann mechanische Kräfte, wie Zug- und/oder Druckkräfte, standhalten.

Das Flächengebilde kann im Wesentlichen vollständig mit der Beschichtung beschichtet sein. Das im Wesentlichen kann bedeuten, dass zumindest 90 %, zumindest 92 %, zumindest 94 %, zumindest 96 %, zumindest 98 % oder zumindest 99 % der Fläche des Flächengebildes mit der Beschichtung beschichtet sind.

Das Flächengebilde kann ein Gewicht von zumindest 0,5 kg, bevorzugt zumindest 1,0 kg, bevorzugter zumindest 2,0 kg, bevorzugter zumindest 3,0 kg, bevorzugter zumindest 5,0 kg, bevorzugter zumindest 7,0 kg, bevorzugter zumindest 10,0 kg, aufweisen.

Das Flächengebilde kann eine Fläche von zumindest 0,5 m², bevorzugt zumindest 1,0 m², bevorzugter zumindest 2,0 m², bevorzugter zumindest 3,0 m², bevorzugter zumindest 5,0 m², bevorzugter zumindest 10,0 m², aufweisen.

Alle Seiten des Flächengebildes können mit der Beschichtung beschichtet sein. Die Beschichtung kann die Sensoranordnung bedecken, insbesondere vollständig bedecken. Die Beschichtung kann die äußerste Schicht des Flächengebildes sein. Die Beschichtung kann mit der Umwelt, z.B. der Umgebungsluft, in Kontakt stehen.

Das Trägermaterial kann die Beschichtung direkt kontaktieren. Zwischen dem Trägermaterial und der Beschichtung kann keine weitere Schicht vorgesehen sein.

Allgemein kann unter "elektrisch leitfähig" eine elektrische Leitfähigkeit von zumindest 10⁻⁸ S cm⁻¹ bzw. ein spezifischer Widerstand von weniger als 10⁸ Ω cm. Unter "nicht elektrisch leitfähig" kann eine elektrische Leitfähigkeit von weniger als 10⁻⁸ S cm⁻¹ bzw. ein spezifischer Widerstand von zumindest als 10⁸ Ω cm verstanden werden.

Die Sensoranordnung kann ein Teil eines Sensors sein. Der Sensor kann zusätzlich zu der Sensoranordnung weitere Sensoranordnungen, eine Energieversorgung, eine Auswerteeinheit und/oder eine Steuereinheit umfassen.

Die Sensoranordnung kann eingerichtet sein eine Bewegung des Flächengebildes, eine Druckkraft in dem Flächengebilde, eine Zug-kraft in dem Flächengebilde, eine Torsion des Flächengebildes, ein Knicken des Flächengebildes, eine Beschädigung des Flächengebildes und/oder ein Reißen des Flächengebildes zu erfassen.

Die Sensoranordnung kann eingerichtet sein, eine elektrische Widerstandsmessung oder eine elektrische Kapazitätsmessung durchzuführen oder an der jeweiligen Messung teilzunehmen. Insbesondere ist die Sensoranordnung eingerichtet, eine Änderung des elektrischen Widerstands oder eine Änderung der elektrischen Kapazität zu erfassen oder an der Erfassung teilzunehmen.

Die Beschichtung kann eine Dicke von zumindest 1 mm, bevorzugt zumindest 2 mm, bevorzugter zumindest 3 mm, bevorzugter zumindest 5 mm, bevorzugter zumindest 7 mm, bevorzugter zumindest 10 mm, aufweisen. Die Beschichtung kann eine größere Dicke aufweisen als das Trägermaterial.

Allgemein kann eine Dicke ein Erstreckung senkrecht zu einer von dem Flächengebilde definierten Ebene sein. Die Ebene kann durch die flächige Erstreckung des Flächengebildes definiert sein.

Die Beschichtung kann einen Kunststoff umfassen. Insbesondere kann die Beschichtung ein Elastomer, ein Silikon, ein chlorsulfoniertes Polyethylen, ein TPU, EPDM und/oder PVC umfassen. Die Beschichtung kann aus einem Elastomer, einem Silikon, einem chlorsulfoniertes Polyethylen, einem TPU, EPDM und/oder PVC bestehen. Besonders bevorzugt umfasst die Beschichtung ein Silikon oder besteht aus einem Silikon.

Das Flächengebilde mit der Beschichtung kann eine um zumindest 10 % höhere Biegesteifigkeit aufweisen als das Trägermaterial. Insbesondere weist das Flächengebilde mit der Beschichtung eine um zumindest 30 %, bevorzugt zumindest 50 %, bevorzugter zumindest 100 %, höhere Biegesteifigkeit auf als das Trägermaterial. Die Biegesteifigkeit kann bestimmt werden nach VDA 230-209 Teil C, insbesondere nach der am Anmeldetag gültigen Fassung.

Das Flächengebilde mit der Beschichtung kann eine um zumindest 10 % höhere Festigkeit oder Zugfestigkeit aufweisen als das Trägermaterial. Insbesondere weist das Flächengebilde mit der Beschichtung eine um zumindest 30 %, bevorzugt zumindest 50 %, bevorzugter zumindest 100 %, höhere Festigkeit oder Zugfestigkeit auf als das Trägermaterial.

Das Flächengebilde mit der Beschichtung kann eine um zumindest 10 % höhere Höchstzugkraft aufweisen als das Trägermaterial. Insbesondere weist das Flächengebilde mit der Beschichtung eine um zumindest 30 %, bevorzugt zumindest 50 %, bevorzugter zumindest 100 %, höhere Höchstzugkraft auf als das Trägermaterial. Die Höchstzugkraft kann bestimmt werden nach DIN EN ISO 13934-1:2013-08.

Das Flächengebilde mit der Beschichtung kann eine um zumindest 10 % höhere Höchstzugkraft-Dehnung aufweisen als das Trägermaterial. Insbesondere weist das Flächengebilde mit der Beschichtung eine um zumindest 30 %, bevorzugt zumindest 50 %, bevorzugter zumindest 100 %, Höchstzugkraft-Dehnung auf als das Trägermaterial. Die Höchstzugkraft-Dehnung kann bestimmt werden nach DIN EN ISO 13934-1:2013-08.

Durch die Beschichtung kann die Biegesteifigkeit, die Festigkeit, die Zugfestigkeit, die Höchstzugkraft und/oder die Höchstzugkraft-Dehnung erhöht werden oder erhöht sein. Die Beschichtung kann wesentlich zur Festlegung zumindest einer mechanischen Eigenschaft des Flächengebildes beitragen oder die zumindest eine mechanische Eigenschaft wesentlich definieren. Wesentlich kann in diesem Zusammenhang bedeuten, dass zumindest 20 %, zumindest 40 %, zumindest 50 %, zumindest 60 %, zumindest 70 %, der zumindest einen mechanischen Eigenschaft durch die Beschichtung verursacht sind.

Die Beschichtung kann eine um zumindest 20 %, zumindest 40 %, zumindest 50 %, zumindest 60 % oder zumindest 70 % höhere Biegesteifigkeit, höhere Festigkeit, höhere Zugfestigkeit, höhere Höchstzugkraft und/oder höhere Höchstzugkraft-Dehnung aufweisen als das Trägermaterial.

Die Beschichtung kann brandhemmend, brandverzögernd oder brandbeständig sein oder wirken. Insbesondere ist die Beschichtung feuerhemmend oder feuerbeständig. Die Feuerhemmung und Feuerbeständigkeit kann nach EN 45545-2, ECE-R118 und/oder NFPA 130, insbesondere in der am Anmeldetag gültigen Fassung, bestimmt werden oder definiert sein. Die Beschichtung kann Feuerwiderstandsklasse F30, F60, F90, F120 oder F180 sein.

Die Beschichtung kann zumindest ein Additiv umfassen. Das Additiv kann ein Mineral sein. Die Beschichtung kann mehrere, z.B. zwei, drei oder vier, verschiedene Minerale umfassen. Das Additiv oder die Minerale können feuerhemmend oder brandhemmend in der Beschichtung wirken.

Die Beschichtung kann nicht elektrisch leitfähig sein.

Das Trägermaterial kann die elektrisch leitfähigen Garne und elektrisch nicht leitfähige Garne umfassen. Höchsten 30 %, bevorzugt höchstens 20 %, bevorzugter höchstens 10 %, der Garne des Trägermaterials können elektrisch leitfähige Garne sein. Das Trägermaterial kann aus elektrisch leitfähigen Garnen und elektrisch nicht leitfähigen Garnen bestehen.

Das Trägermaterial kann ein Gewebe, ein Gestricke, ein Gewirke, ein Non-woven, ein Vlies, ein Filz oder ein Gelege, insbesondere ein Fadengelege, sein.

Die leitfähigen Garne können in das Trägermaterial eingebracht sein. Insbesondere sind die leitfähigen Garne in das Trägermaterial eingewebt oder eingestrickt. Die leitfähigen Garne können auf das Trägermaterial aufgebracht sein. Insbesondere sind die leitfähigen Garne auf das Trägermaterial aufgestickt.

Das Trägermaterial kann eine geringere Dicke aufweisen als die Beschichtung.

Die elektrisch leifähigen Garne können zumindest einen Draht umfassen. Der zumindest eine Draht kann ein metallischer Draht sein. Der Draht kann mehrere Litzen (Einzellitzen) umfassen oder daraus bestehen. Die elektrisch leitfähigen Garne können unterschiedliche leitfähige Garne sein. Insbesondere unterscheiden sich unterschiedliche leitfähige Garne durch ihr Material, ihre Dicke, ihren Durchmesser, ihre Länge, ihre elektrische Leitfähigkeit und/oder ihren elektrischen Widerstand.

Zumindest ein Draht, insbesondere zumindest ein metallischer Draht, kann in jeweils einem elektrisch leitfähigen Garn eingearbeitet sein. Insbesondere ist zumindest ein Draht, insbesondere zumindest ein metallischer Draht, mit jeweils einem elektrisch leitfähigen Garn verdreht oder verdrillt.

Die elektrisch leitfähigen Garne können eine elektrisch leitfähige Beschichtung umfassen. Die elektrisch leitfähige Beschichtung kann eine metallische Beschichtung, insbesondere eine Silber-Beschichtung, sein. Die elektrisch leitfähige Beschichtung kann durch Galvanisierung hergestellt worden sein.

Die elektrisch leitfähigen Garne können zumindest ein elektrisch leitfähiges Polymer umfassen.

Die elektrisch leitfähigen Garne können Metallpartikel umfassen. Die Garne können Stapelfasergame sein.

Die elektrisch leitfähigen Garne können zumindest ein Additiv umfassen. Durch das Additiv kann die elektrische Leitfähigkeit verursacht werden. Das zumindest eine Additiv kann Ruß und/oder Aktivkohle sein. Das Additiv kann der Spinnmasse zugesetzt sein.

Die elektrisch leitfähigen Garne können ein Polyester, ein Polyamid, ein Aramid, Polypropylen, Baumwolle und/oder Viskose umfassen. Die Grundstruktur der elektrisch leitfähigen Garne kann durch ein Polyester, ein Polyamid, ein Aramid, Polypropylen, Baumwolle und/oder Viskose gebildet sein. Die elektrische Leitfähigkeit kann durch einen Draht, insbesondere einen metallischen Draht, oder eine Beschichtung, insbesondere eine metallische Beschichtung, speziell eine Silber-Beschichtung, verursacht sein.

Die elektrisch nicht leitfähigen Garne können ein Polyester, ein Polyamid, ein Aramid, Polypropylen, Baumwolle und/oder Viskose umfassen oder daraus bestehen.

Die Sensoranordnung kann sich höchstens abschnittsweise über das Flächengebilde erstrecken. Die Sensoranordnung kann sich vollständig über das Flächengebilde erstrecken. Die Fläche der Sensoranordnung kann kleiner sein als die Fläche des Flächengebildes. Die Fläche der Sensoranordnung kann gleich sein wie die Fläche des Flächengebildes. Die Fläche kann als die flächige Erstreckung verstanden werden.

Die Sensoranordnung kann sich über zumindest zwei voneinander beabstandete Abschnitte erstrecken. Bevorzugt erstreckt sich die Sensoranordnung über zumindest drei, bevorzugt zumindest vier, bevorzugter zumindest fünf, voneinander beabstandete Abschnitte. Die beabstandeten Abschnitte können gemeinsam als Sensoranordnung verstanden werden.

Die Sensoranordnung kann sich über eine Fläche erstrecken, die zumindest 50 %, bevorzugt zumindest 70 %, bevorzugter zumindest 90 %, der Fläche des Flächengebildes beträgt.

Die Sensoranordnung kann zumindest eine Hauptleitung umfassen, die mit mehreren Neben-leitung verbunden ist. Jede der Nebenleitungen kann mit der Hauptleitung verbunden sein. Jede der Nebenleitungen kann einzeln ansteuerbar und/oder auslesbar sein. Keine der Nebenleitungen kann mit einer anderen Nebenleitung (direkt physisch) verbunden sein.

Das Flächengebilde kann eine Verdrahtung umfassen, durch die die Sensoranordnung mit elektrischer Energie oder mit elektrischem Strom versorgbar ist. Die Verdrahtung kann sich zumindest abschnittsweise durch die Beschichtung erstrecken. Zusätzlich oder alternativ kann die Sensoranordnung über die Verdrahtung steuerbar sein. Weiter zusätzlich oder alternativ kann über die Verdrahtung ein Signal ausgehend von der Sensoranordnung übertragbar sein.

Das Flächengebilde kann einen Energiespeicher umfassen, durch den die Sensoranordnung mit elektrischer Energie versorgbar ist. Der Energiespeicher kann eine Batterie oder einen Akku umfassen oder eine Batterie oder ein Akku sein.

Das Flächengebilde kann eine Energieversorgungseinrichtung umfassen, die eingerichtet ist, elektrische Energie drahtlos zu empfangen. Beispielsweise kann die Energieversorgungseinrichtung eingerichtet sein, elektrische Energie durch elektromagnetische Strahlung zu empfangen. Die Sensoranordnung kann induktiv, also durch Induktion, mit elektrischer Energie (mit Strom) versorgbar sein.

Das Flächengebilde kann eine Antenne zum Senden und/oder Empfangen von Daten umfassen. Die Daten können Signale der Sensoranordnung umfassen. Insbesondere umfassen die Daten Widerstands- und/oder Kapazitätsdaten der Sensoranordnung. Die Widerstands- und/oder Kapazitätsdaten können durch die Sensoranordnung erfasst werden.

Das Flächengebilde kann einen Controller zum Steuern der Sensoranordnung umfassen. Insbesondere kann der Controller eingerichtet sein, hierin offenbarte Verfahrensschritte auszuführen oder diese zu veranlassen.

Angegeben ist ein Verfahren zum Erfassen einer Bewegung eines Flächengebildes. Das Flächengebilde kann jedes hierin offenbarte Flächengebilde sein. Das Flächengebilde kann ein Trägermaterial, eine Beschichtung, die zumindest auf eine Seite des Trägermaterials aufgebracht oder angeordnet ist, und/oder eine Sensoranordnung umfassen. Das Verfahren kann die Schritte umfassen: Erfassen eines Signals ausgehend von der Sensoranordnung und Ermitteln der Bewegung des Flächengebildes auf Grundlage des Signals. Alternativ kann das Verfahren die Schritte umfassen: Erfassen eines Signals durch die Sensoranordnung und Ermitteln der Bewegung des Flächengebildes auf Grundlage des Signals.

Durch die Sensoranordnung können Widerstands- und/oder Kapazitätsdaten ermittelt werden. Auf Grundlage dieser Daten kann eine Bewegung des Flächengebildes ermittelt werden. Beispielsweise kann eine Position und eine Anordnung der Sensoranordnung, insbesondere von leitfähigen Garnen der Sensoranordnung, bekannt sein. Bei einer Bewegung des Flächengebildes kann sich die relative Position von leitfähigen Garnen zueinander verändern. Die Veränderung der relativen Position kann durch veränderte Widerstands- und/oder Kapazitätswerte ermittelt werden. Auf Grundlage der Veränderung kann eine Bewegung des Flächengebildes abgeschätzt oder ermittelt werden.

Das Verfahren kann zusätzlich umfassen: Einbringen von (elektrischem) Strom in die Sensoranordnung und insbesondere Erfassen eines (elektrischen) Widerstands oder einer (elektrischen) Kapazität der Sensoranordnung als das Signal.

Das Verfahren kann zusätzlich umfassen: Einbringen von (elektrischem) Strom in die Sensoranordnung und insbesondere Erfassen einer (elektrischen) Widerstandsänderung oder einer (elektrischen) Kapazitätsänderung der Sensoranordnung als das Signal.

Angegeben ist ein Verfahren zur Herstellung eines Flächengebildes. Das Flächengebilde kann jedes hierin offenbarte Flächengebilde sein. Das Verfahren umfasst die Schritte: Bereitstellen eines Trägermaterials, Aufbringen oder Einbringen von elektrisch leitfähigen Garnen auf oder in das Trägermaterial, sodass eine Sensoranordnung in zumindest einem Abschnitt des Trägermaterials gebildet wird, Aufbringen einer Beschichtung auf zumindest eine Seite des Trägermaterials und Erhalten eines Flächengebildes, insbesondere eines Flächengebildes mit einem Trägermaterial, einer Beschichtung und einer Sensoranordnung.

Das Verfahren kann zusätzlich umfassen: Abtrennen eines Abschnitts des Trägermaterials, wobei der Abschnitt die Sensoranordnung umfasst, und wobei das Flächengebilde die Form des Abschnitts aufweist.

Die Beschichtung des Trägermaterials kann durchgeführt werden, bevor ein Abschnitt des Trägermaterials abgetrennt wird oder nachdem ein Abschnitt des Trägermaterials abgetrennt wurde.

Das Verfahren kann zusätzlich umfassen: Einbringen oder Aufbringen einer Verdrahtung in das Flächengebilde oder das Trägermaterial, sodass die Sensoranordnung über die Verdrahtung mit elektrischer Energie versorgbar ist. Insbesondere erstreckt sich die Verdrahtung zumindest teilweise durch die Beschichtung. Die Verdrahtung kann jede hierin offenbarte Verdrahtung sein.

Angegeben ist ein Übergangselement zum Schutz eines Übergangs von zwei relativ zueinander beweglich miteinander verbundenen Fahrzeugteilen oder Bauteilen. Das Übergangselement kann jedes hierin offenbarte Flächengebilde umfassen.

Das Übergangselement kann einen Querschnitt mit Eckbereichen aufweisen. Die Eckbereiche können abgerundet sein. Das Übergangselement kann mehrere Ecken oder Eckbereiche, z.B. vier Ecken, aufweisen. Zwischen den Ecken können Seitenbereiche, ein Dachbereich und ein Bodenbereich gebildet sein. Das Flächengebilde kann so in dem Übergangselement angeordnet sein, dass die Sensoranordnung oder ein Abschnitt der Sensoranordnung in einem Eckbereich, einem Dachbereich, einem Seitenbereich und/oder einem Bodenbereich angeordnet ist. Eine Sensoranordnung oder jeweils ein Abschnitt der Sensoranordnung kann in jedem Eckbereich, in jedem Dachbereich, in jedem Seitenbereich und/oder in jedem Bodenbereich angeordnet sein. Dadurch lässt sich die Bewegung des Flächengebildes in dem Übergangselement überwachen. Besonders bevorzugt ist die Sensoranordnung oder ein Abschnitt der Sensoranordnung in einem Eck- und/oder einem Dachbereich angeordnet.

Das Übergangselement kann ein Übergangsbalg sein. Bevorzugt ist das Übergangselement ein Wellen- oder Faltenbalg.

Angegeben ist ein Fahrzeug, eine Fluggastbrücke oder eine Gebäudeverbindung mit zwei relativ zueinander beweglichen Fahrzeugteilen oder Bauteilen. Das Fahrzeug, die Fluggastbrücke oder die Gebäudeverbindung kann jedes hierin offenbarte Übergangselement umfassen.

Angegeben ist eine Verwendung eines Flächengebildes für ein Übergangselement eines Fahrzeugs, einer Fluggastbrücke, einer Fluggasttreppe oder einer Gebäudeverbindung. Das Flächengebilde kann jedes hierin offenbarte Flächengebilde sein.

Weiter angegeben ist eine Verwendung eines Flächengebildes für eine Plane, insbesondere für eine Plane einer Anlage. Die Anlage kann eine Biogasanlage sein. Das Flächengebilde kann jedes hierin offenbarte Flächengebilde sein.

Ebenso angegeben ist eine Verwendung eines Flächengebildes für eine Ummantelung oder eine Verkleidung, insbesondere für eine Ummantelung oder eine Verkleidung einer Treibstoffleitung, eines Treibstofftanks oder einer Treibstoffzuführung. Das Flächengebilde kann jedes hierin offenbarte Flächengebilde sein.

### KURZE BESCHREIBUNG DER FIGUREN

Nachfolgend wird anhand von Figuren die Offenbarung bzw. weitere Ausführungsformen und Vorteile der Offenbarung näher erläutert, wobei die Figuren lediglich Ausführungsbeispiele der Offenbarung beschreiben. Gleiche Bestandteile in den Figuren werden mit gleichen Bezugszeichen versehen.
Fig. 1 zeigt ein Flächengebilde 100 in einer Draufsicht mit angedeutetem Schnitt A-A;
Fig. 2 zeigt das Flächengebilde 100 in der in Fig. 1 angedeuteten Schnittansicht A-A;
Fig. 3 zeigt schematisch eine Anordnung von elektrisch leitfähigen Garnen 20 in einer Sensoranordnung 130;
Fig. 4 zeigt schematisch eine Anordnung von elektrisch leitfähigen Garnen 20 in einer Sensoranordnung 130;
Fig. 5 zeigt schematisch eine Anordnung von elektrisch leitfähigen Garnen 20 in einer Sensoranordnung 130;
Fig. 6 zeigt schematisch ein Flächengebilde 100 mit einer Energieversorgungseinrichtung 300 und einem Controller 200;
Fig. 7 zeigt schematisch ein Flächengebilde 100 mit einer Energieversorgungseinrichtung 300,
einem Controller 200 und einer Energieübertragungseinrichtung 400;
Figs. 8a bis 8d zeigen Schritte der Herstellung eines Flächengebildes 100;
Fig. 9 zeigt ein Übergangselement 1000;
Fig. 10 zeigt ein Fahrzeug 2000; und
Fig. 11 zeigt eine Anlage 3000.

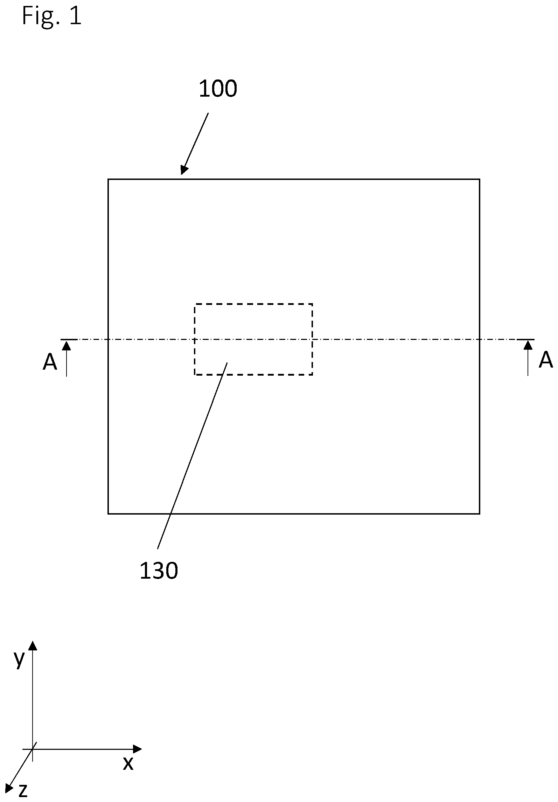

Fig. 1 zeigt schematisch ein Flächengebilde 100 in einer Draufsicht. Das Flächengebilde 100 kann eine x-y-Ebene definieren. Die Ebene kann durch die flächige Erstreckung des Flächengebildes 100 definiert werden. Senkrecht zu der x-y-Ebene kann eine z-Richtung orientiert sein. In z-Richtung kann die Dicke des Flächengebildes 100 vorliegen.

Das Flächengebilde 100 kann eine um ein Vielfaches größere Breite (z.B. in x-Richtung) und/oder Länge (z.B. in y-Richtung) als Dicke (z.B. in z-Richtung) aufweisen. Das Vielfache kann zumindest fünf, bevorzugt zumindest zehn, bevorzugter zumindest zwanzig sein.

Das Flächengebilde 100 kann eine im Wesentlichen (±10 % oder ±5 %) konstante Dicke aufweisen, insbesondere über die gesamte Erstreckung des Flächengebildes 100.

Das Flächengebilde 100 weist eine Sensoranordnung 130 auf. Die Sensoranordnung 130 kann sich höchstens abschnittsweise über des Flächengebilde 100 erstrecken. Ebenso kann sich die Sensoranordnung 130 im Wesentlichen über die gesamte Fläche des Flächengebildes 100 erstrecken. Die Sensoranordnung 130 kann mehrere Abschnitte umfassen. Die mehreren Abschnitte können voneinander beabstandet sein. Die mehreren Abschnitte können regelmäßig, beispielsweise in einem Raster, oder unregelmäßig in dem Flächengebilde 100 angeordnet sein.

Die Sensoranordnung 130 kann eine Fläche von zumindest 10 cm², zumindest 50 cm², zumindest 100 cm² oder zumindest 200 cm² aufweisen. Ein Abschnitt der Sensoranordnung 130 kann eine Fläche von zumindest 10 cm², zumindest 50 cm², zumindest 100 cm² oder zumindest 200 cm² aufweisen.

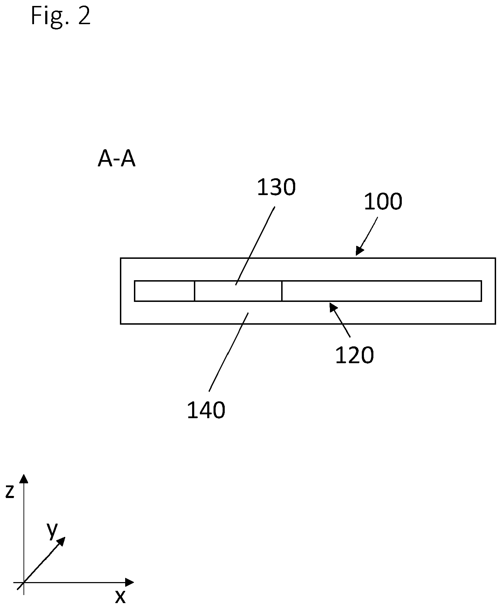

Fig. 2 zeigt das Flächengebilde 100 in der in Fig. 1 angedeuteten Schnittansicht A-A.

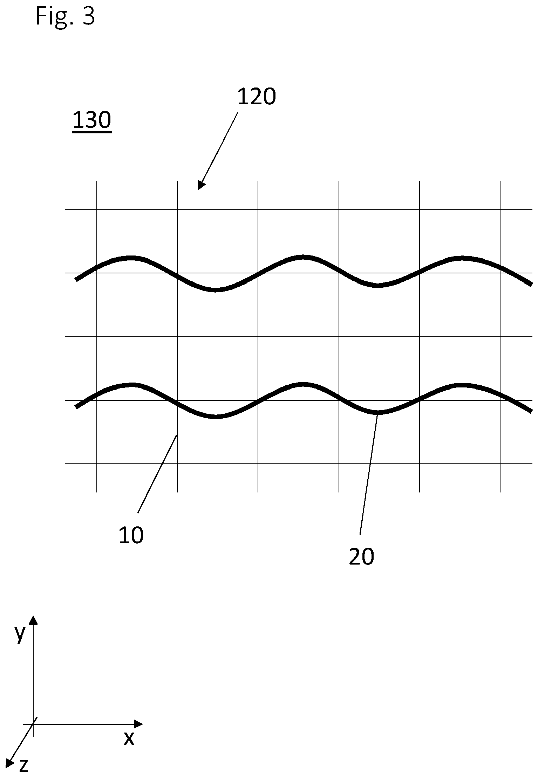

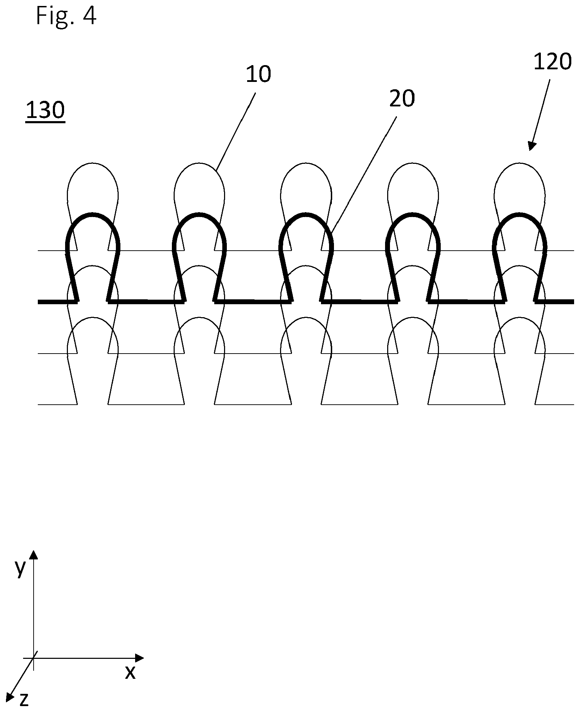

Das Flächengebilde 100 umfasst ein Trägermaterial 120 und eine Beschichtung 140. In zumindest einem Abschnitt des Trägermaterials 120 sind elektrisch leitfähige Garne 20 (sh. auch Figs. 3 und 4) vorgesehen. Durch die elektrische leitfähigen Garne 20 ist eine Sensoranordnung 130 gebildet.

Das Trägermaterial 120 kann dem Flächengebilde 100 eine Grundstabilität verleihen. Das Trägermaterial 120 kann ein textiles, insbesondere ein vollständig textiles, Material sein. In der Regel ist das Trägermaterial 120 nicht ausgelegt, Umwelteinflüssen standzuhalten oder größere mechanische Kräfte aufzunehmen.

Das Trägermaterial 120 ist mit einer Beschichtung 140 versehen. Dabei kann zumindest eine Seite des Trägermaterials 120 mit der Beschichtung 140 versehen sein. Bevorzugt sind alle Seiten des Trägermaterials 120 mit der Beschichtung 140 versehen. Das Trägermaterial 120 kann im Wesentlichen vollständig von der Beschichtung 140 umschlossen oder umgeben sein. Durch die Beschichtung 140 kann das Trägermaterial 120 vor Umwelteinflüssen geschützt werden und/oder durch die Beschichtung 140 können größere mechanische Kräfte durch das Flächengebilde 100 aufnehmbar sein. Die Beschichtung 140 kann ausgelegt sein, Umwelteinflüssen standzuhalten und/oder mechanische Kräfte, beispielsweise Zug- und/oder Druckkräfte, aufzunehmen und diesen standzuhalten. Insbesondere kann die Beschichtung 140 solchen mechanischen Kräften standhalten oder diese aufnehmen, die auf ein Übergangselement eines Busses wirken.

Die Beschichtung 140 kann ein flexibles, nicht-starres und/oder elastisches Material umfassen oder aus dem Material bestehen. Die Beschichtung 140 kann eine größere Dicke aufweisen als das Trägermaterial 120. Die Dicke der Beschichtung 140 kann als Erstreckung der Beschichtung 140 in einer Richtung (z-Richtung) senkrecht zu der von dem Flächengebilde 100 definierten Ebene (x-y-Ebene) vorliegen. Wenn die Beschichtung 140 beidseitig auf das Trägermaterial 120 aufgebracht ist, kann die Dicke als Summe der Dicke von Abschnitten der Beschichtung 140 zu verstehen sein. Alternativ kann sich die Dicke der Beschichtung 140 (nur) auf die Dicke eines Abschnitt, also beispielsweise auf die Dicke der Beschichtung 140 auf einer Seite des Trägermaterials 120, beziehen.

In Fig. 3 ist schematisch eine Anordnung von elektrisch leitfähigen Garnen 20 in einer Sensoranordnung 130 gezeigt.

Das Trägermaterial 120 kann ein Gewebe oder ein Geflecht sein. Bevorzugt ist das Trägermaterial 120 ein textiles Gewebe oder Geflecht. Das Trägermaterial 120 kann ein textiles Flächengebilde 100 sein. Das Trägermaterial 120 kann zwei Fadensysteme umfassen oder daraus bestehen. Die zwei Fadensysteme können Kette und Schuss sein.

Das Trägermaterial 120 kann (nur oder ausschließlich) elektrisch nicht leitfähige Garne 10 umfassen. Das Trägermaterial 120 kann ohne elektrisch leitfähige Garne 20 ein Gewebe oder ein Geflecht sein.

In oder auf das Trägermaterial 120 können elektrisch leitfähige Garne 20 eingebracht oder aufgebracht werden. Die elektrisch leitfähigen Garne 20 können in das Trägermaterial 20 eingewebt oder aufgestickt werden. Bevorzugt sind die elektrisch leitfähigen Garne 20 in Richtung eines der Fadensysteme (Kettrichtung oder Schussrichtung) in oder auf das Trägermaterial 120 eingebracht oder aufgebracht.

Die elektrisch leitfähigen Garne 20 können fest mit dem Trägermaterial 120 verbunden sein. Ein Entfernen der elektrisch leitfähigen Garne 20 aus oder von dem Trägermaterial 120 kann ohne Beschädigung oder Zerstörung des Trägermaterials 120 nicht möglich sein. Mit anderen Worten, ein beschädigungsfreies oder zerstörungsfreies Entfernen von elektrisch leitfähigen Garnen 20 aus dem Trägermaterial 120 kann nicht möglich sein.

Durch die elektrisch leitfähigen Garne 20 ist eine Sensoranordnung 130 gebildet. Der Abschnitt des Trägermaterials 120, in dem die elektrisch leitfähigen Garne 20 vorliegen, kann als Sensoranordnung 130 verstanden werden. In einem Abschnitt des Trägermaterials 120, in dem kein elektrisch leitfähiges Garn 20 vorliegt, kann keine Sensoranordnung 130 gebildet sein.

In Fig. 4 ist schematisch eine Anordnung von elektrisch leitfähigen Garnen 20 in einer Sensoranordnung 130 gezeigt.

Alternativ zu der in Fig. 3 dargestellten Anordnung, kann das Trägermaterial 120 Maschen umfassen. Das mit Blick auf Fig. 3 beschriebene ist für das mit Blick auf Fig. 4 beschriebene gültig.

Das Trägermaterial 120 in der Ausführungsform der Fig. 4 kann ein Gestricke sein. Die elektrisch leitfähigen Garne 20 können in das Trägermaterial 120 eingestrickt sein. Bevorzugt ist das Trägermaterial 120 als Gestricke aus nicht elektrisch leitfähigen Garnen 10 aufgebaut. Zusätzlich zu den nicht elektrisch leitfähigen Garnen 10 können elektrisch leitfähige Garne 20 in das Trägermaterial 120 eingebracht werden. Mit anderen Worten, das Trägermaterial 120 kann bereits ohne elektrisch leitfähige Garne 20 stabil sein. Die elektrisch leitfähigen Garne 20 können zusätzlich in das Trägermaterial 120 eingebracht werden, um eine Sensoranordnung 130 zu bilden.

Alternativ oder zusätzlich können die elektrisch leitfähigen Garne 20 eine Stabilität des Trägermaterials bewirken. Ohne die elektrisch leitfähigen Garne 20 kann das Trägermaterial 120 zumindest nicht vollständig stabil sein.

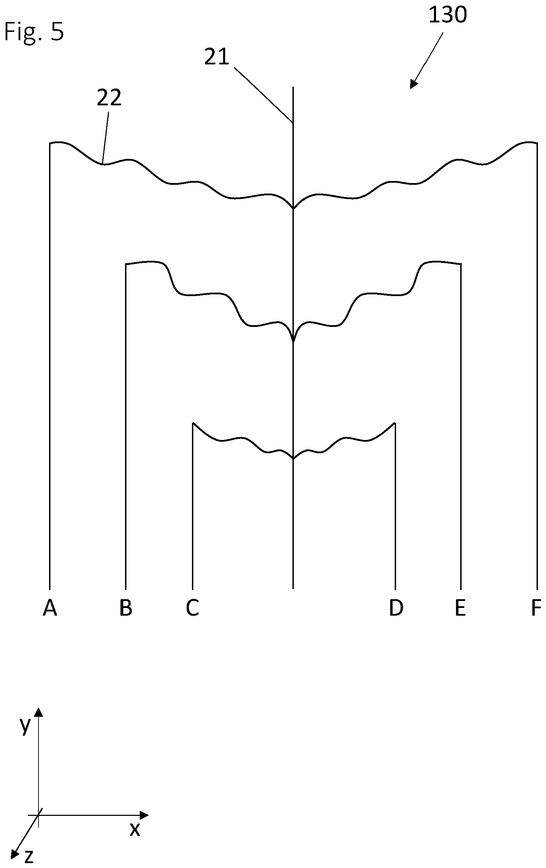

Fig. 5 zeigt schematisch eine Anordnung von elektrisch leitfähigen Garnen 20. Die elektrisch leitfähige Garne 20 können in eine Hauptleitung 21 und mehrere Nebenleitungen 22 unterteilt sein. Die mehreren Nebenleitungen 22 können jeweils mit der Hauptleitung 21 (direkt physisch) verbunden sein. Die mehreren Nebenleitungen 22 können nicht (direkt physisch) miteinander verbunden sein.

Die Nebenleitungen 22 können sich seitlich von der Hauptleitung 21 erstrecken. Die Nebenleitungen 22 und die Hauptleitung 21 können fischgrätenähnlich angeordnet sein. Diese Anordnung ist lediglich ein Beispiel, andere Anordnungen von elektrisch leitfähigen Garnen 20 bzw. von Nebenleitungen 22 und Hauptleitung 21 sind denkbar und möglich.

Beispielsweise kann eine relative Positionierung der Nebenleitungen 22 und der Hauptleitung 21 zueinander bekannt sein. Die relative Positionierung kann durch das aufbringen oder einbringen der elektrisch leitfähigen Garne 20 festgelegt werden. Dies kann je nach Wunsch und Anwendung erfolgen.

An die Hauptleitung 21 kann in einem ersten Zeitraum ein Signal angelegt werden, beispielsweise eine Spannung. Das Signal kann an den Nebenleitungen 22 abgefragt werden. Dazu kann nacheinander und insbesondere zeitlich beabstandet an den Nebenleitungen 22 gemessen werden. In Fig. 5 sind unterschiedliche Nebenleitungen 22 mit A, B, C, D, E und F bezeichnet. Zunächst kann an der Nebenleitung A gemessen werden, anschließend an der Nebenleitung B, usw.

In einem zweiten Zeitraum kann wiederum ein Signal an die Hauptleitung 21 angelegt werden. Das Signal in dem zweiten Zeitraum kann gleich sein zu dem Signal in dem ersten Zeitraum. Der zweite Zeitraum kann direkt auf den ersten Zeitraum folgen oder der zweite Zeitraum kann zeitlich von dem erste Zeitraum beabstandet sein. Die Nebenleitungen 22 (A, B, C, D, E, F) können in dem zweiten Zeitraum vermessen werden. Messungen innerhalb einer Vielzahl von Zeiträumen sind möglich. Die Messungen können kontinuierlich aufeinanderfolgend durchgeführt werden.

Hat sich die Position des Flächengebildes 100 in dem zweiten Zeitraum gegenüber der Position des Flächengebildes 100 in dem ersten Zeitraum verändert, können sich die relativen Positionen der elektrisch leitfähigen Garne 20, also der Hauptleitung 21 und der Nebenleitungen 22, verändert haben. Dadurch kann sich bei gleichem Signal an der Hauptleitung 21 in den unterschiedlichen Zeiträumen eine unterschiedliche Messungen an den Nebenleitungen 22 (A, B, C, D, E, F) ergeben.

Auf Grundlage der Änderung der Messung der Nebenleitungen 22 kann auf die Bewegung des Flächengebildes 100 geschlossen werden. Allgemein kann die Messung eine elektrische Widerstandsmessung oder eine elektrische Kapazitätsmessung sein.

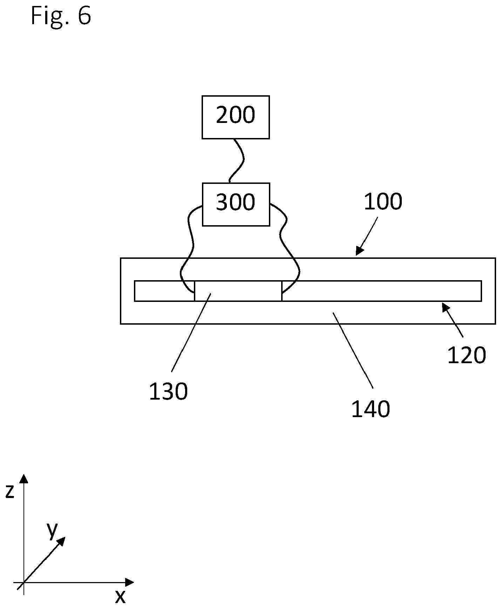

Fig. 6 zeigt schematisch ein Flächengebilde 100 mit einem Controller 200 und einer Energieversorgungseinrichtung 300. Die Energieversorgungseinrichtung 300 kann eingerichtet sein, elektrische Energie für die Sensoranordnung 130 bereitzustellen.

Beispielsweise ist die Energieversorgungseinrichtung 300 mit der Sensoranordnung 130 verdrahtet. Die Verdrahtung kann sich durch die Beschichtung 140 erstrecken. Die Verdrahtung kann sich durch eine Seitenfläche des Flächengebildes 100 erstrecken und/oder durch eine Stirnfläche des Flächengebildes 100.

Die Energieversorgungseinrichtung 300 kann auch in dem Flächengebilde 100 integriert sein, beispielsweise als Batterie oder Akku.

Ein Controller 200 kann direkt mit der Sensoranordnung 130 verbunden sein. Alternativ kann der Controller 200 mit der Energieversorgungseinrichtung 300 verbunden sein. Über eine Verdrahtung der Energieversorgungseinrichtung 300 mit der Sensoranordnung 130 kann der Controller 200 mit der Sensoranordnung 130 kommunizieren.

Ebenso kann der Controller 200 Teil der Sensoranordnung 130 sein. Beispielsweise kann der Controller 200 in das Flächengebilde 100, insbesondere in die Sensoranordnung 130, integriert sein.

Der Controller 200 kann eingerichtet sein, hierin offenbarte Verfahrensschritte auszuführen oder zu veranlassen. Beispielsweise kann der Controller 200 die Sensoranordnung 130 steuern. Der Controller 200 kann das Anlegen eines Signals an die elektrisch leitfähigen Garne 20, z.B. an die Hauptleitung 21, veranlassen. Das Signal kann von dem Controller 200 bereitgestellt werden. Der Controller 200 kann die Messung an den elektrisch leitfähigen Garnen 20, z.B. an den Nebenleitungen 22, veranlassen. Die Messung kann von dem Controller 200 durchgeführt werden.

Eine Auswerteeinheit (nicht dargestellt) kann vorgesehen sein. Die Auswerteeinheit kann eingerichtet sein, auf Grundlage der Messungen eine Bewegung des Flächengebildes 100 abzuschätzen oder zu ermitteln. Die Auswerteeinheit kann in das Flächengebilde 100, insbesondere in die Sensoranordnung 130, integriert sein. Alternativ kann die Auswerteeinheit außerhalb des Flächengebildes 100 vorgesehen oder angeordnet sein.

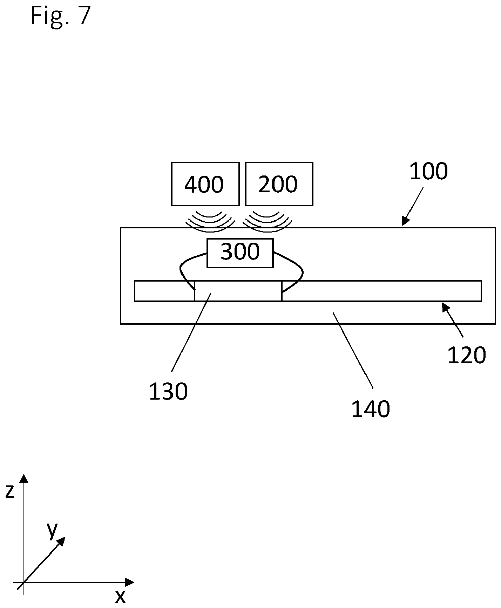

Fig. 7 zeigt schematisch ein Flächengebilde 100, einen Controller 200, eine Energieversorgungseinrichtung 300 und eine Energieübertragungseinrichtung 400.

Die Energieversorgungseinrichtung 300 kann in das Flächengebilde 100, insbesondere in die Sensoranordnung 130, integriert sein. Die Energieversorgungseinrichtung 300 kann mit der Sensoranordnung 130 verdrahtet sein.

Die Energieübertragungseinrichtung 400 kann eingerichtet sein, elektromagnetische Strahlung oder elektromagnetische Wellen zu erzeugen, um die Energieversorgungseinrichtung 300 (kontaktlos) mit elektrischer Energie zu versorgen. Die Energieversorgungseinrichtung 300 kann eingerichtet sein, (kontaktlos) Energie zu empfangen. Die Energieversorgungseinrichtung 300 kann eingerichtet sein, die Sensoranordnung 130 mit elektrischer Energie zu versorgen.

Der Controller 200 kann (kontaktlos) mit der Sensoranordnung 130 kommunizieren. Dabei kann der Controller 200 die gleichen Funktionen besitzen wie der Controller 200, der mit Blick auf Fig. 6 beschrieben wurde.

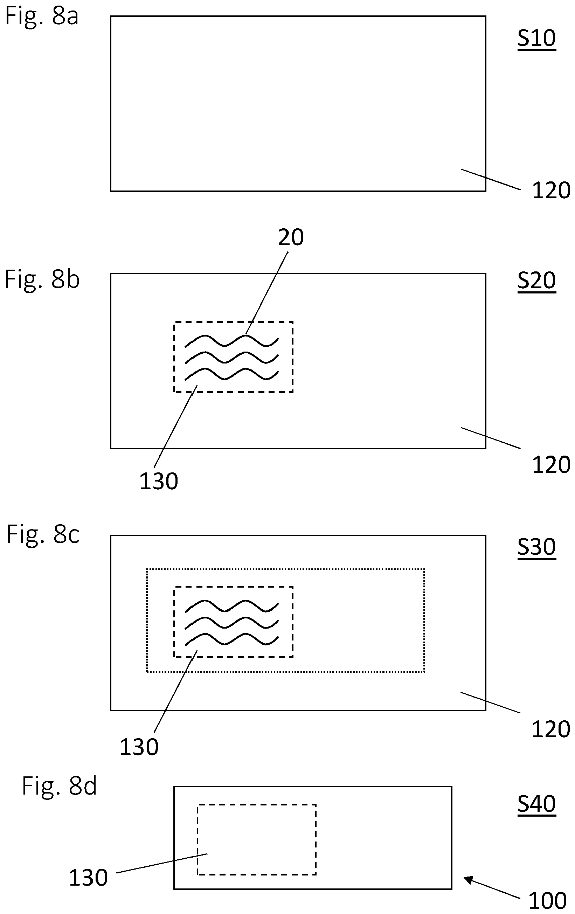

Die Fig. 8a bis 8d zeigen Schritte eines Herstellverfahrens eines Flächengebildes 100. In dem Verfahren kann jedes hierin offenbarte Flächengebilde 100 hergestellt werden.

In Schritt S10 (Fig. 8a) kann ein Trägermaterial 120 bereitgestellt werden. Das Trägermaterial 120 kann jedes hierin offenbarte Trägermaterial 120 sein. Das Trägermaterial 120 kann einstückig sein. Das Trägermaterial 120 kann aus einem (gleichen) Material bestehen. Insbesondere umfasst das Trägermaterial 120 keine elektrisch leitfähigen Garne 20.

In Schritt S20 (Fig. 8b) können elektrisch leitfähige Garne 20 in zumindest einen Abschnitt des Trägermaterials 120 eingebracht oder aufgebracht werden. Dadurch kann in diesem Abschnitt eine Sensoranordnung 130 gebildet werden.

In Schritt S30 (Fig. 8c) kann ein Abschnitt des Trägermaterials 120 abgetrennt werden. Der abgetrennte Abschnitt kann die Form des hergestellten Flächengebildes 100 aufweisen. Der abgetrennte Abschnitt kann die Sensoranordnung 130 umfassen. Vor dem Abtrennen des Abschnitts kann das Trägermaterial 120 mit einer Beschichtung 140 beschichtet werden. Alternativ kann der abgetrennte Abschnitt des Trägermaterials 120 nach dem Abtrennen mit der Beschichtung 140 beschichtet werden. Zumindest die Sensoranordnung 130 kann mit der Beschichtung 140 beschichtet werden. Zumindest eine Seite des Trägermaterials 120 kann mit der Beschichtung 140 beschichtet werden, insbesondere werden alle Seiten des Trägermaterials 120 mit der Beschichtung 140 beschichtet.

In Schritt S40 (Fig. 8d) ist das abgetrennte Flächengebilde 100 gezeigt. Das abgetrennte Flächengebilde 100 kann die Beschichtung 140 an zumindest einer Seite des Trägermaterials 120 aufweisen.

Jeder der Schritte S10 bis S40 kann ein optionaler Schritt sein.

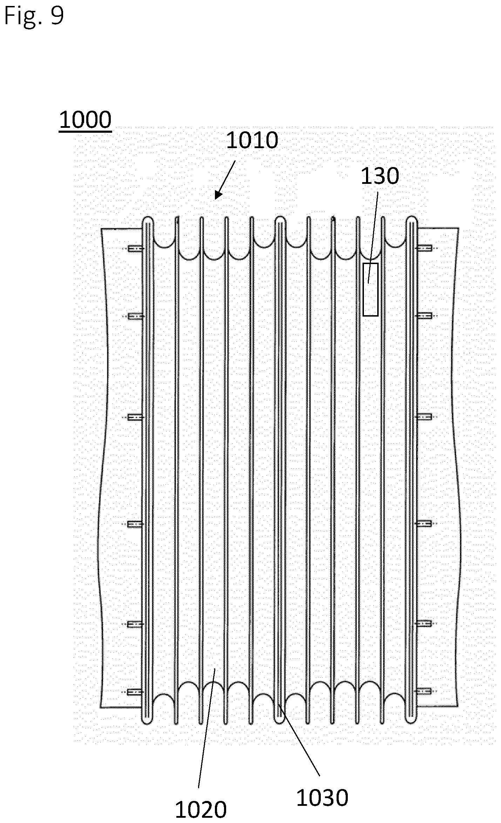

Fig. 9 zeigt ein Übergangselement 1000 in einer Seitenansicht. Das Übergangselement 1000 kann ein Balg sein, insbesondere ein Wellen- oder Faltenbalg. Das Übergangselement 1000 kann ein Flächengebilde 100 umfassen.

Das Übergangselement 1000 kann eine Übergangselementwand 1010 umfassen. Die Übergangselementwand 1010 kann das Flächengebilde 100 umfassen oder daraus bestehen. Für eine Übergangselementwand 1010 kann das Flächengebilde 100 so geformt werden, dass diese einen tunnelartigen oder kanalartigen Raum umgibt.

Die Übergangselementwand 1010 kann im Querschnitt rechteckig oder kastenförmig sein. Die Übergangselementwand 1010 kann mehrere Ecken, z.B. vier Ecken, aufweisen. Zwischen den Ecken können Seitenbereiche, ein Dachbereich und ein Bodenbereich gebildet sein. Das Flächengebilde 100 kann so in dem Übergangselement 1000 angeordnet sein, dass die Sensoranordnung 130 oder ein Abschnitt der Sensoranordnung 130 in einem Eckbereich, einem Dachbereich, einem Seitenbereich und/oder einem Bodenbereich angeordnet ist. Eine Sensoranordnung 130 oder jeweils ein Abschnitt der Sensoranordnung 130 kann in jedem Eckbereich, in jedem Dachbereich, in jedem Seitenbereich und/oder in jedem Bodenbereich angeordnet sein. Dadurch lässt sich die Bewegung des Flächengebildes 100 in dem Übergangselement 1000 überwachen.

Das Übergangselement 1000 kann mehrere beabstandete Rahmen 1030, z.B. Balgspannrahmen, umfassen. Die Rahmen 1030 können das Übergangselement 1000 vollständig umlaufen. Zwischen den Rahmen 1030 können Übergangselementwände 1010 eingespannt sein.

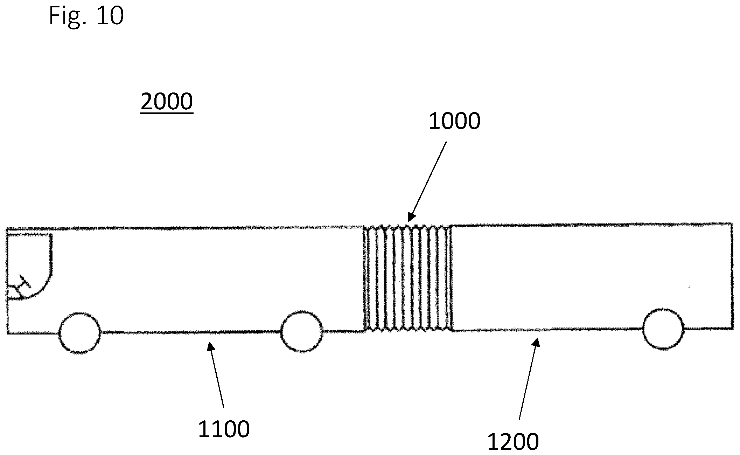

Fig. 10 zeigt ein Fahrzeug 2000. Das Fahrzeug 2000 kann ein erstes Fahrzeugteil 1100 und ein zweites Fahrzeugteil 1200 umfassen. Das Übergangselement 1000 kann zwischen dem ersten und zweiten Fahrzeugteil 1100, 1200 angeordnet sein. Das Übergangselement 1000 kann einen Übergang der zwei relativ zueinander beweglich miteinander verbunden Fahrzeugteilen 1100, 1200 schützen. Das Fahrzeug kann ein Schienenfahrzeug oder ein Bus, insbesondere ein Gelenkbus, sein.

Das erste und zweite Fahrzeugteil 1100, 1200 können um eine vertikale Drehachse relativ zueinander verdrehbar und/oder in Fahrtrichtung relativ zueinander verschiebbar und/oder quer zur Fahrtrichtung verschiebbar und/oder um eine Längsachse des Fahrzeugs drehbar miteinander verbunden sein.

Das Übergangselement 1000 kann zum Schutz eines Übergangs einer Fluggastbrücke oder Fluggasttreppe eingesetzt werden. Ebenso kann das Übergangselement 1000 zum Schutz eines Übergangs von zwei Gebäudeteilen, beispielsweise zwischen einer Brücke und einem Gebäudeabschnitt, eingesetzt werden.

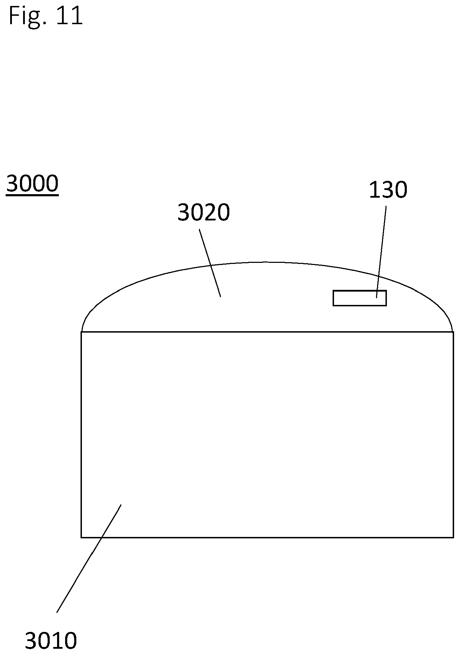

Fig. 11 zeigt eine Anlage 3000. Die Anlage 3000 kann eine Plane 3020 umfassen. Die Plane 3020 kann jedes der hierin offenbarten Flächengebilde 100 umfassen oder daraus bestehen. Durch die Sensoranordnung 130 in der Plane 3020 kann eine Bewegung der Plane 3020 überwacht werden. Auf Grundlage der Bewegung der Plane 3020 kann auf einen Zustand der Anlage 3000 geschlossen werden. Die Plane 3020 kann auf einen Behälter 3010 aufgebracht sein.

Beispielsweise ist die Anlage 3000 eine Biogasanlage, wobei in dem Behälter 3010 Biogas erzeugt wird. Auf Grundlage der Bewegung der Plane 3020 lässt sich der Füllzustand oder ein anderer Zustand der Anlage abschätzen.

Nicht in den Figuren gezeigt ist eine Ummantelung oder Verkleidung, beispielsweise für eine Treibstoffleitung, einen Treibstofftank oder eine Treibstoffzuführung. Die Ummantelung oder Verkleidung kann jedes hierin offenbarte Flächengebilde 100 umfassen oder daraus bestehen. Durch die Sensoranordnung 130 kann eine Bewegung der Ummantelung oder Verkleidung abgeschätzt oder ermittelt werden. Auf Grundlage der Bewegung der Ummantelung oder Verkleidung kann ein Verschleiß der Ummantelung oder Verkleidung abgeschätzt werden.

### BEZUGSZEICHENLISTE

- 100: Flächengebilde
- 120: Trägermaterial
- 130: Sensoranordnung
- 140: Beschichtung
- 10: elektrisch nicht leitfähiges Garn
- 20: elektrisch leitfähiges Garn
- 21: Hauptleitung
- 22: Nebenleitung
- 200: Controller
- 300: Energieversorgungseinrichtung
- 400: Energieübertragungseinrichtung
1000 Übergangselement
1010 Übergangselementwand
1020 Übergangselementwandabschnitt
1030 Rahmen
1100 Fahrzeugteil
1200 Fahrzeugteil
2000 Fahrzeug
3000 Anlage
3010 Behälter
3020 Plane

## Patentansprüche

1. Flächengebilde (100), insbesondere teilweise textiles Flächengebilde (100), wobei:
- das Flächengebilde (100) ein Trägermaterial (120) und eine Beschichtung (140) umfasst;
- das Trägermaterial (120) elektrisch leitfähige Garne (20) umfasst und die Beschichtung (140) auf zumindest einer Seite des Trägermaterials (120) aufgebracht ist; und
- durch die elektrisch leitfähigen Garne (20) eine Sensoranordnung (130) in dem Flächengebilde (100) gebildet ist.

2. Flächengebilde nach Anspruch 1, wobei die Sensoranordnung (130) eingerichtet ist, eine Bewegung des Flächengebildes (100), eine Druckkraft in dem Flächengebilde (100), eine Zug-kraft in dem Flächengebilde (100), eine Torsion des Flächengebildes (100), ein Knicken des Flächengebildes (100), eine Beschädigung des Flächengebildes (100) und/oder ein Reißen des Flächengebildes (100) zu erfassen, insbesondere wobei die Sensoranordnung (130) eingerichtet ist eine Widerstandsmessung oder eine Kapazitätsmessung durchzuführen oder wobei die Sensoranordnung (130) eingerichtet ist, eine Widerstandsänderung oder eine Kapazitätsänderung zu erfassen.

3. Flächengebilde nach Anspruch 1 oder 2, wobei:
- die Beschichtung (140) eine Dicke von zumindest 1 mm, bevorzugt zumindest 2 mm, bevorzugter zumindest 3 mm, bevorzugter zumindest 5 mm, bevorzugter zumindest 7 mm, bevorzugter zumindest 10 mm, aufweist; und/oder
- die Beschichtung (140) einen Kunststoff umfasst, insbesondere ein Elastomer, ein Silikon, ein chlorsulfoniertes Polyethylen, ein TPU, EPDM und/oder PVC umfasst; und/oder
- das Flächengebilde (100) mit der Beschichtung (140) eine um zumindest 10 %, bevorzugt zumindest 30 %, bevorzugter zumindest 50 %, bevorzugter zumindest 100 %, höhere Biegesteifigkeit aufweist als das Trägermaterial (120); und/oder
- die Beschichtung (140) brandverzögernd wirkt, insbesondere die Beschichtung zumindest ein Mineral umfasst; und/oder
- die Beschichtung (140) nicht elektrisch leitfähig ist.

4. Flächengebilde nach einem der vorhergehenden Ansprüche, wobei:
- das Trägermaterial (120) die elektrisch leitfähigen Garne (20) und elektrisch nicht leitfähige Garne (10) umfasst; und/oder
- das Trägermaterial (120) ein Gewebe, ein Gestricke, ein Gewirke, ein Non-woven, ein Vlies, ein Filz oder ein Gelege, insbesondere ein Fadengelege, ist; und/oder
- die leitfähigen Garne (20) in das Trägermaterial (120) eingebracht, insbesondere eingewebt oder eingestrickt, sind oder die leitfähigen Garne (20) auf das Trägermaterial (20) aufgebracht, insbesondere aufgestickt, sind; und/oder
- das Trägermaterial (120) eine geringere Dicke aufweist als die Beschichtung (140).

5. Flächengebilde nach einem der vorhergehenden Ansprüche, wobei:
- die elektrisch leifähigen Garne (20) einen Draht, insbesondere einen metallischen Draht, umfassen; und/oder
- ein Draht, insbesondere ein metallischer Draht, in jeweils einem elektrisch leitfähigen Garn (20) eingearbeitet, bevorzugt verdreht, ist; und/oder
- die elektrisch leitfähigen Garne (20) eine elektrisch leitfähige Beschichtung umfassen, insbesondere eine Silber-Beschichtung; und/oder
- die elektrisch leifähigen Garne (20) ein Polyester, ein Polyamid, ein Aramid, Polypropylen, Baumwolle und/oder Viskose umfassen.

6. Flächengebilde nach einem der vorhergehenden Ansprüche, wobei:
- sich die Sensoranordnung (130) höchstens abschnittsweise oder vollständig über das Flächengebilde (100) erstreckt; und/oder
- sich die Sensoranordnung (130) über zumindest zwei voneinander beabstandete Abschnitte erstreckt; und/oder
- sich die Sensoranordnung (130) über eine Fläche erstreckt, die zumindest 50 %, bevorzugt zumindest 70 %, bevorzugter zumindest 90 %, der Fläche des Flächengebildes (100) beträgt; und/oder
- die Sensoranordnung (130) zumindest eine Hauptleitung (21) umfasst, die mit mehreren Nebenleitung (22) verbunden ist.

7. Flächengebilde nach einem der vorhergehenden Ansprüche, wobei:
- das Flächengebilde (100) eine Verdrahtung umfasst, durch die die Sensoranordnung (130) mit elektrischer Energie versorgbar ist; und/oder
- das Flächengebilde (100) einen Energiespeicher, insbesondere eine Batterie oder einen Acku, umfasst, durch den die Sensoranordnung mit elektrischer Energie versorgbar ist; und/oder
- das Flächengebilde (100) eine Energieversorgungseinrichtung (300) umfasst, die eingerichtet ist, elektrische Energie drahtlos zu empfangen.

8. Flächengebilde nach einem der vorhergehenden Ansprüche, wobei:
- das Flächengebilde (100) einen Controller (200) zum Steuern der Sensoranordnung (130) umfasst; und/oder
- das Flächengebilde (100) eine Antenne zum Senden und/oder Empfangen von Daten umfasst.

9. Verfahren zum Erfassen einer Bewegung eines Flächengebildes (100), insbesondere eines Flächengebildes (100) nach einem der vorhergehenden Ansprüche, das Flächengebilde (100) mit einem Trägermaterial (120), einer Beschichtung (140), die zumindest auf einer Seite des Trägermaterials (120) aufgebracht ist, und einer Sensoranordnung (140), das Verfahren mit den Schritten:
- Erfassen eines Signals ausgehend von der Sensoranordnung (140); und
- Ermitteln der Bewegung des Flächengebildes (100) auf Grundlage des Signals.

10. Verfahren nach Anspruch 9, wobei:
- das Verfahren zusätzlich umfasst: Einbringen von Strom in die Sensoranordnung (140) und Erfassen eines Widerstands oder einer Kapazität der Sensoranordnung (140) als das Signal; und/oder
- das Verfahren zusätzlich umfasst: Einbringen von Strom in die Sensoranordnung (140) und Erfassen einer Widerstandsänderung oder einer Kapazitätsänderung der Sensoranordnung (140) als das Signal.

11. Verfahren zur Herstellung eines Flächengebildes (100), insbesondere eines Flächengebildes (100) nach einem der Ansprüche 1 bis 8, das Verfahren mit den Schritten:
- Bereitstellen eines Trägermaterials (120);
- Aufbringen oder Einbringen von elektrisch leitfähigen Garnen (20) auf oder in das Trägermaterial (120), sodass eine Sensoranordnung (130) in zumindest einem Abschnitt des Trägermaterials (120) gebildet wird;
- Aufbringen einer Beschichtung (140) auf zumindest eine Seite des Trägermaterials (120); und
- Erhalten eines Flächengebildes (100) mit einem Trägermaterial (120), einer Beschichtung (140) und einer Sensoranordnung (130).

12. Verfahren nach Anspruch 11, wobei:
- das Verfahren zusätzlich umfasst: Abtrennen eines Abschnitts des Trägermaterials (120), wobei der Abschnitt die Sensoranordnung umfasst, und wobei das Flächengebilde (100) die Form des Abschnitts aufweist; und/oder
- das Verfahren zusätzlich umfasst: Einbringen oder Aufbringen einer Verdrahtung in das Flächengebilde (100) oder das Trägermaterial (120), sodass die Sensoranordnung (130) über die Verdrahtung mit elektrischer Energie versorgbar ist, insbesondere wobei sich die Verdrahtung zumindest teilweise durch die Beschichtung (140) erstreckt.

13. Übergangselement (1000) zum Schutz eines Übergangs von zwei relativ zueinander beweglich miteinander verbundenen Fahrzeugteilen oder Bauteilen (1100, 1200) umfassend das Flächengebilde (100) nach einem der Ansprüche 1 bis 8.

14. Fahrzeug, Fluggastbrücke, Fluggasttreppe oder Gebäudeverbindung mit zwei relativ zueinander beweglich miteinander verbundenen Fahrzeugteilen oder Bauteilen (1100, 1200) und einem Übergangselement (1000) nach Anspruch 13.

15. Verwendung eines Flächengebildes nach einem der Ansprüche 1 bis 8 für ein Übergangselement eines Fahrzeugs, einer Fluggastbrücke, einer Fluggasttreppe oder einer Gebäudeverbindung; oder für eine Plane einer Anlage, insbesondere für eine Biogasanlage; oder für eine Ummantelung oder eine Verkleidung, insbesondere für eine Ummantelung oder eine Verkleidung einer Treibstoffleitung, eines Treibstofftanks oder einer Treibstoffzuführung.
